# EUROPÄISCHE PATENTSCHRIFT

(11) **EP 1 126 683 B1**
(45) Veröffentlichungstag und Bekanntmachung des Hinweises auf die Patenterteilung: **09.07.2003**
(21) Anmeldenummer: 00103070.9
(22) Anmeldetag: 15.02.2000
(51) Int. Cl.: H04L 29/12, H04L 29/06

(54) **Verfahren zum Adressieren von WML-Seiten im World Wide Web (WWW)**
Method for addressing WML pages in the World Wide Web (WWW)
Procédé pour adresser des pages WML dans le World Wide Web (WWW)

(43) Veröffentlichungstag der Anmeldung: 22.08.2001
(73) Patentinhaber: Rogator AG, 90408 Nürnberg (DE); Richter, Thomas, 91056 Erlangen (DE)
(72) Erfinder: Richter, Thomas, 91056 Erlangen (DE)

(56) Entgegenhaltungen:
- WO-A-00/02403
- US-A- 5 895 471

## Beschreibung

Die vorliegende Erfindung betrifft ein Verfahren zum Adressieren von WML-Seiten im World Wide Web (WWW).

Das Wireless Application Protokoll (WAP) stellt einen neuen intelligenten Nachrichtendienst für digitale Mobilfunkgeräte zur Verfügung, durch den ermöglicht wird, Internet-Inhalte mittels eines speziellen Textformates über WAP-fähigen Mobilfunkgeräte, insbesondere GSM-Mobilfunkgeräten, anzusehen.

Ein wesentliches technisches Merkmal bei WAP besteht in der Verwendung der sogenannten WML (Wireless Markup Language)-Sprache, bei der es sich vereinfacht ausgedrückt um eine graphikarme Version der im Internet üblichen HTML (Hypertext Markup Language)-Sprache handelt.

Derzeit sind bereits einige Mobilfunkgeräte, wie beispielsweise das Nokia 7110, das Ericsson R 380 oder das Siemens S 25 auf dem Markt, die WAP-fähig sind und somit WML-Dokumente darstellen können.

Das derzeit von Mobilfunk-Providern angewendete Verfahren, dem eigenen Kunden WML-Seiten zum Empfang zur Verfügung zu stellen, besteht darin, Verbindungsanfragen, die von einem Mobilfunkgerät im WAP-Mode abgesendet werden, zu erkennen und dem anfragenden Mobilfunkteilnehmer in Antwort hierauf eine Intemet-Portalseite in WML-Format zurückzuschicken, auf der der Benutzer über seine Tastatur angebotene Inhalte auswählen kann. In Antwort auf den Empfang der entsprechenden Auswahlinformation schickt der Mobilfunk-Provider dem anfragenden Mobilfunkgerät den gewünschten Inhalt im WML-Format zur Ansicht.

Ausgehend von diesem bekannten Stand der Technik liegt der vorliegenden Erfindung die Aufgabe zugrunde, ein Verfahren anzugeben, mit dem eine freie und vereinfachte Adressierung von WML-Seiten im World Wide Web (WWW) ermöglicht wird.

Diese Aufgabe wird in erfindungsgemäßer Weise durch die Gegenstände der Ansprüche 1 und 2 gelöst.

Insbesondere wird die Aufgabe zum einen durch ein Verfahren zum Adressieren von WML-Seiten im World Wide Web (WWW) mittels eines Mobilfunkgeräts, umfassend die Schritte: Bereitstellen eines bestimmten Web-Servers, der an das World Wide Web (WWW) angeschlossen ist und unter einer bestimmten IP-Adresse angesprochen werden kann, Definieren eines bestimmten Domain-Namens, der zu der bestimmten IP-Adresse des bestimmen Web-Servers korrespondiert und Eintragen des entsprechenden bestimmten Domain-Namens bei zumindest einem Name-Server des World Wide Web (WWW), wobei zumindest der Second-Level-Domain-Bestandteil dieses Domain-Namens aus einer Folge von Zeichen besteht, von denen sich jedes einzelne über die Tastatur des Mobilfunkgerätes direkt eintippen läßt, Bereitstellen eines Adressierungsportals auf dem bestimmten Web-Server, wobei das Adressierungsportal eine Tabellen- oder Datenbankeinrichtung umfaßt, die eine eindeutige Zuweisung von Pseudo-Adressen zu IP-Adressen des World Wide Web (WWW) oder zu auf Namen-Servern des World Wide Web registrierten korrespondierenden Domain-Namen vorgeben, wobei die jeweilige Zuweisung File-Verzeichnisse auf dem entsprechenden Sever mitenthalten kann und wobei die Pseudo-Adressen ausschließlich aus Zahlen bestehen, Eingeben des bestimmten Domain-Namens sowie einer gewünschten Pseudo-Adresse über die Tastatur des Mobilfunkgerätes, Übertragen einer Verbindungsanfrage, enthaltend den bestimmen Domain-Namen und die gewünschte Pseudo-Adresse über Funk an eine Gateway-Einrichtung, die eine Einspeisung der Verbindungsanfrage in das World Wide Web (WWW) ermöglicht, durch Unterstützung eines Name-Servers des World Wide Web (WWW), bei dem der bestimmte Domain-Name des bestimmten Web-Servers registriert ist: Vermitteln der Verbindungsanfrage an den bestimmten Web-Server; durch Unterstützung des Adressierungsportals des bestimmen Web-Servers: Vermitteln der Verbindungsanfrage an denjenigen Server des World Wide Web (WWW), dessen IP-Adresse oder dessen Domain-Name durch die in der Tabellen- oder Datenbankeinrichtung des Adressierungsportals enthaltene Zuweisungsvereinbarung aufgrund der in der Verbindungsanfrage enthaltenen Pseudo-Adresse vorgegeben ist.

Zum anderen wird die Aufgabe gelöst durch ein Verfahren zum Adressieren von WML-Seiten im World Wide Web (WWW) mittels eines Mobilfunkgeräts, umfassend die Schritte: Bereitstellen eines bestimmten Web-Servers, der an das World Wide Web (WWW) angeschlossen ist und unter einer bestimmten IP-Adresse angesprochen werden kann, Definieren eines bestimmten Domain-Namens, der zu der bestimmten IP-Adresse des bestimmen Web-Servers korrespondiert und Eintragen des entsprechenden bestimmten Domain-Namens bei zumindest einem Name-Server des World Wide Web (WWW), wobei zumindest der Second-Level-Domain-Bestandteil dieses Domain-Namens aus einer Folge von Zeichen besteht, von denen sich jedes einzelne über die Tastatur des Mobilfunkgerätes direkt eintippen läßt, Bereitstellen eines Adressierungsportals auf dem bestimmten Web-Server, wobei das Adressierungsportal eine Tabellen- oder Datenbankeinrichtung umfaßt, die eine eindeutige Zuweisung von Pseudo-Adressen zu IP-Adressen des World Wide Web (WWW) oder zu auf Namen-Servern des World Wide Web registrierten korrespondierenden Domain-Namen vorgeben, wobei die jeweilige Zuweisung File-Verzeichnisse auf dem entsprechenden Server mitenthalten kann und wobei die Pseudo-Adressen ausschließlich aus Zahlen bestehen, Eingeben des bestimmten Domain-Namens über die Tastatur des Mobilfunkgerätes, Übertragen einer Verbindungsanfrage, enthaltend den bestimmen Domain-Namen über Funk an eine Gateway-Einrichtung, die eine Einspeisung der Verbindungsanfrage in das World Wide Web (WWW) ermöglicht, durch Unterstützung eines Name-Servers des World Wide Web (WWW), bei dem der bestimmte Domain-Name des bestimmten Web-Servers registriert ist: Vermitteln der Verbindungsanfrage an den bestimmten Web-Server; durch Unterstützung des Adressierungsportals des bestimmen Web-Servers:
Aufbauen einer Verbindung zwischen dem Adressierungsportal und dem Mobilfunkgerät, Auffordern des Benutzers zur Eingabe einer gewünschten Pseudoadresse; Eingeben der Pseudoadresse über die Tastatur des Mobilfunkgerätes, Vermitteln einer Verbindungsanfrage an denjenigen Server des World Wide Web (WWW), dessen IP-Adresse oder dessen Domain-Name durch die in der Tabellen- oder Datenbankeinrichtung des Adressierungsportals enthaltene Zuweisungsvereinbarung aufgrund der Pseudo-Adresse vorgegeben ist.

Bevorzugte Ausgestaltungen der vorliegenden Erfindung sind Gegenstand der Unteransprüche.

Im folgenden werden bevorzugte Ausführungsformen der vorliegenden Erfindung unter Bezugnahme auf die beiliegenden Zeichnungen näher erläutert. Dabei zeigen die Zeichnungen im einzelnen:
Fig. 1 eine schematische Darstellung der Systemvoraussetzungen zur Durchführung einer bevorzugten Ausführungsform des erfindungsgemäßen Verfahrens,
Fig. 2a, b schematische Darstellungen für eine verwendete Tabelleneinrichtung gemäß einer bevorzugten Ausführungsform des erfindungsgemäßen Verfahrens, und
Fig. 3 ein schematisch dargestelltes Mobilfunkgerät zur Erläuterung einer bevorzugten Ausführungsform des erfindnungsgemäßen Verfahrens.

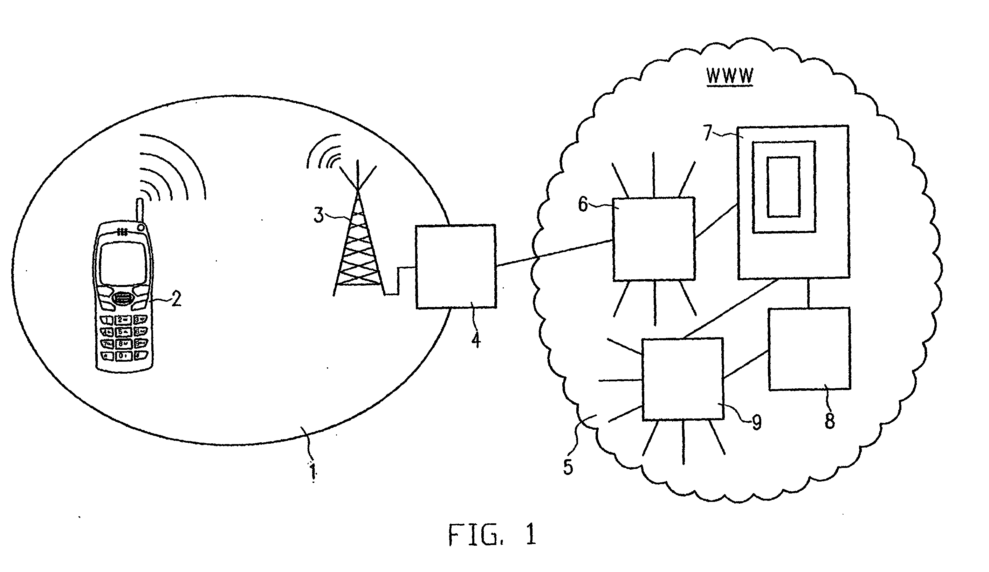

Fig. 1 zeigt eine schematische Darstellung zur Erläuterung der Systemvoraussetzungen, die für die im folgenden erläuterte bevorzugte Ausführungsform des erfindungsgemäßen Verfahrens gegeben sein müssen.

Der Bereich 1 steht stellvertretend für ein Mobilfunksystem, bei dem es sich vorzugsweise um eine digitales Mobilfunksystem und insbesondere bevorzugterweise um ein GSM-System handelt. Das Mobilfunksystem 1 weist eine Vielzahl von Mobilfunkgeräten 2 auf, von denen zur Vereinfachung nur ein einziges eingezeichnet ist. Das Mobilfunkgerät 2 ist in der Lage, Funkkommunikationen mit einer Basisstation 3 aufzubauen, wobei klar sein sollte, daß das System 1 vorzugsweise eine Vielzahl von Basisstationen 3 aufweist. Die gesamte Architektur des Systems 1 entspricht herkömmlichen oder zukünftigen Mobilfunksystemen und insbesondere GSM-Mobilfunksystemen, so daß für den Fachmann klar ist, daß ein derartiges System durch Fig. 1 nur ansatzweise wiedergegeben ist und in der Realität eine wesentlich komplexere Struktur aufweist. Das Mobilfunksystem 1 steht über eine Gateway-Einrichtung 4 mit dem Internet 5 und insbesondere mit dem WWW-Dienst des World Wide Web in Verbindung. Für den Fachmann sollte klar sein, daß die Gateway-Einrichtung 4 für jeden Telefon-Provider separat ausgeführt ist und somit eine einzelne Gateway-Einrichtung nur aus Gründen der Vereinfachung dargestellt ist.

Das Internet 5 weist eine Vielzahl von Web-Servern 6, 7, 8, 9 auf, wobei wiederum klar sein sollte, daß die tatsächliche Anzahl bei mehreren Millionen Web-Servem liegt. Jedem in das Internet eingebundenen Web-Server ist eine numerische Netzadresse , die sogenannte IP-Adresse, zugewiesen, zum Beispiel http:// 124.58.334.0.

Da derartige numerische Adressen schwer zu merken sind, wurde bereits in den Achtzigerjahren vorgeschlagen, ein sogenanntes Domain-Name System einzuführen, bei dem jedem Web-Server ein sogenannter Domain-Name zugewiesen wird. Die entsprechenden Domain-Namen sind in der Regel Buchstabenketten, die auf die hinter dem Web-Server stehende Firma oder Person hinweisen, wie beispielsweise rogator.de.

Damit ein bestimmter Web-Server über den ihm zugewiesenen Domain-Namen ansprechbar ist, muß die Zuordnung zwischen tatsächlicher IP-Adresse und Domain-Namen in sogenannten Name-Servern registriert sein, die dann auf Domain-Namen abgestimmte Verbindungsanfragen an den richtigen Web-Server unter Verwendung seiner tatsächlichen IP-Adresse weiterleiten bzw. eine derartige Weiterleitung möglich machen.

Domain-Namen weisen im wesentlichen zwei Bestandteile auf, zum einen die sogenannte Top-Level-Domain, die aus einem Länderkürzel, wie .de, .it oder aus einem eine dahinterstehende Organisation kennzeichnenden Bestandteil, wie .com, .org oder .net ect. besteht.

Der links neben dem Top-Level-Domain-Bestandteil stehende Teil wird als Second-Level-Domain-Bestandteil bezeichnet und stellt üblicherweise einen Firmen- oder Markennamen dar, den sich interessierte Verkehrskreise leicht einprägen können.

Bei der Darstellung gemäß Fig. 1 wird angenommen, daß es sich bei den Web-Servern 6 und 8 um herkömmliche Name-Server handelt und daß es sich bei dem Web-Server 9 um den Web-Server handelt, der letztendlich von dem Benutzer des Mobilfunkgeräts 2 angesprochen werden soll. Bei dem Web-Server 7 handelt es sich um einen Web-Server, der eine Funktionalität bereitstellt, die die Grundlage für das erfindungsgemäße Verfahren darstellt.

Der vorliegenden Erfindung liegt die Erkenntnis zugrunde, daß es für eine professionelle Nutzung der WAP-Funktionalität erforderlich ist, daß ein Benutzer eines Mobilfunkgeräts 2 unabhängig von seinem Mobilfunk-Provider WML-Seiten einfach auffinden und ansprechen können muß.

Die vorliegende Erfindung baut weiterhin auf der Erkenntnis auf, daß sich die Tastatur von Mobilfunkgeräten zur Eingabe von Domain-Namen nicht eignet, da die geringe Anzahl verfügbarer Tasten eine Doppelbelegung notwendig macht und somit das Eintippen eines Domain-Namens für den Benutzer äußerst mühsam ist.

In erfindungsgemäßer Weise wird aufbauend auf diesen Erkenntnissen vorgeschlagen, einen Web-Server, der an das Internet und insbesondere an den WWW-Dienst angeschlossen ist, als Adressierungsportal für WML-Seiten zu verwenden. Dieser bestimmte Web-Server ist über einen Domain-Namen ansprechbar, der einen Second-Level-Domain-Bestandteil aufweist, der sich aus Buchstaben zusammensetzt, die über die Tastatur eines Mobilfunkgeräts direkt, d.h. ohne sukzessive Mehrfachbetätigung einer Taste oder größere Verweilzeiten, eingetippt werden können.

Gemäß einer bevorzugten Ausführungsform der Erfindung wird für diesen Second-Level-Domain Bestandteil der Name GAMT reserviert.

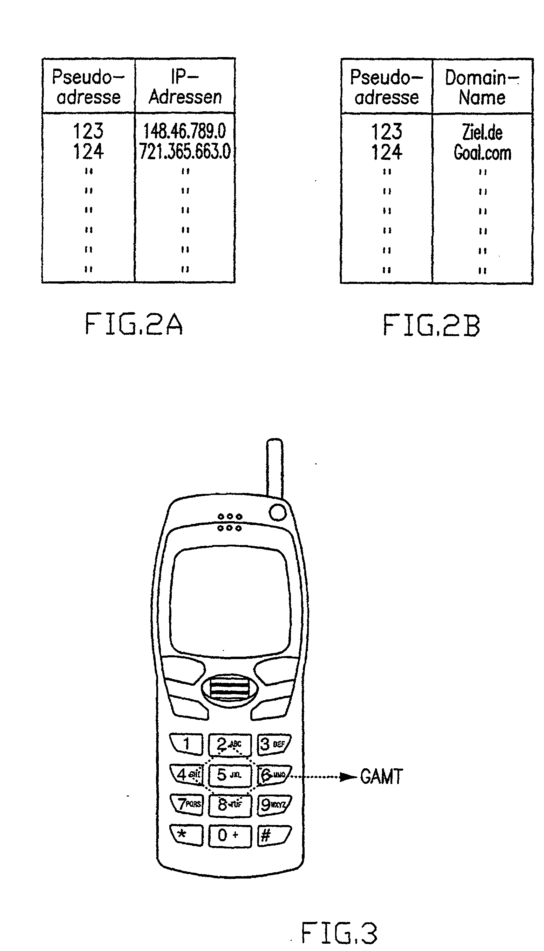

Fig. 3 zeigt eine schematische Darstellung eines typischen Mobilfunkgeräts und verdeutlicht insbesondere, warum der Domain-Name für den erfindungsgemäßen Web-Server besonders geeignet ist. Wie die Fig. 3 zeigt, liegen die vier Buchstaben G, A, M, T aus graphischer Sicht auf einer Raute und lassen sich jeweils durch einmaliges Drücken der Nummerntasten 4, 2, 6 und 8 erzeugen. Damit ist die Eingabe des Namens GAMT für den Benutzer einerseits äußerst einfach und andererseits läßt sich dieser Name besonders gut einprägen. Selbstverständlich ist jedoch auch jeder andere Domain-Name geeignet, der sich mit einer typischen Mobilfunkgerätetastatur unmittelbar eintippen läßt, d.h. bei dem es nicht erforderlich ist, daß Einzeltasten mehrfach gedrückt oder für ein bestimmte Zeit gehalten werden müssen.

Die zusätzlich erforderliche Top-Level-Domain wird vorzugsweise so gewählt, daß sie ebenfalls aus solchen Buchstaben besteht, die durch einmaliges Drücken von Tasten auf dem Mobilfunkgerät 2 eingegeben werden können. Besonders bevorzugterweise wird die Top-Level-Domain .ad gewählt, da diese Domain noch relativ ungebräuchlich ist und sich andererseits durch die Zifferntasten 2 und 3 einfach eintippen läßt. Selbstverständlich kann auch jede weitere verfügbare Top-Level-Domain gewählt werden, soweit sie sich eignet, direkt über die Mobilfunkgerätetastatur eingegeben zu werden.

Gemäß der vorliegenden Erfindung wird durch einen derartig speziellen Domain-Namen ein bestimmter Web-Server 7 im Internet 5 angesprochen, wie dies anhand der Fig. 1 schematisch dargestellt ist. Der bestimmte Web-Server 7 bietet einen Adressenportal-Service an, d.h. er stellt eine Art Name-Server-Funktionalität zur Verfügung, bei der jedoch statt einer Zuordnung von Domain-Namen zu IP-Adressen eine Zuordnung von numerischen Zeichenketten, d.h. Pseudo-Adressen zu IP-Adressen oder Domain-Namen bereitgestellt wird.

Die Pseudo-Adressen können insbesondere für häufig frequentierte Webseiten kurz und somit leicht einprägsam gewählt werden.

Die Fig. 2a und 2b veranschaulichen die von dem Web-Server 7 geleistete Zuordnung und stellen entsprechende Tabelleneinträger innerhalb des Adressenprortals dar.

Fig. 2a verdeutlicht die von dem Adressenportal des Web-Servers 7 der Fig. 1 geleistete Überweisungsfunktion anhand der schematisch dargestellten Tabelle. Ersichtlicherweise werden leicht einprägsame und aus Ziffernfolgen bestehende Zeichenketten echten IP-Adressen zugeordnet. Ein Benutzer eines Mobilfunkgerätes 2 der Fig. 1 wird somit eine bestimmte Pseudo-Adresse über seine Tastatur eintippen, nachdem bereits eine Verbindung zu dem Web-Server 7 aufgebaut wurde. Anhand der im Web-Server 7 gespeicherten Zuordnungstabelle, wie beispielsweise der Tabelle gemäß Fig. 2a, kann dann die tatsächlich zugrunde liegende IP-Adresse nachgeschlagen werden und eine Verbindung zu dem entsprechenden Zielserver, wie beispielsweise dem Web-Server 9, aufgebaut werden.

Fig. 2b zeigt eine alternative Möglichkeit, bei der die vom Web-Server 7 geleistete Zuordnung eine Zuordnung zwischen Pseudo-Adressen und Domain-Namen bereitstellt. Bei einer derartigen Variante wird der Web-Server 7, nachdem die einer bestimmten Pseudo-Adresse zugrunde liegende Domain nachgeschlagen wurde, eine Verbindung zu einem herkömmlichen Name-Server 8 aufbauen bzw. eine solche Verbindung ermöglichen. Durch den angesprochenen Name-Server erfolgt dann die Zuordnung zu dem zwischen Domain-Namen und tatsächlicher IP-Adresse, was eine Verbindung zu dem eigentlichen Ziel-Server 9 möglicht.

Die Eingabe der Pseudo-Adresse kann durch den Benutzer des Mobilfunkgerätes 2 unmittelbar im Anschluß an die Eingabe der Domain das Adressenportal zur Verfügung stellenden Web-Servers, wie beispielsweise GAMT.ad, erfolgen, und der Web-Server 7 nimmt dann diesen angehängten Nummernbestandteil als Grundlage für seine Suche nach der tatsächlichen IP-Adresse oder dem tatsächlichen Domain-Namen. Alternativ kann das Adressenportal des Web-Servers 7 eine Menuefunktion an das Mobilfunkgerät 2 in WML-Format zur Verfügung stellen, nachdem eine Verbindung zwischen Mobilfunkgerät 2 und dem Web-Server 7 aufgebaut wurde. Bei dieser Variante wird der Benutzer des Mobilfunkgeräts 2 somit explizit aufgefordert, eine numerische Pseudo-Adresse einzugeben, was die Benutzung für ungeübte Systemteilnehmer erleichtern dürfte.

## Patentansprüche

1. Verfahren zum Adressieren von WML-Seiten im World Wide Web (WWW) mittels eines Mobilfunkgeräts (2), umfassend die Schritte:
Bereitstellen eines bestimmten Web-Server (7), der an das World Wide Web (WWW) angeschlossen ist und unter einer bestimmten IP-Adresse angesprochen werden kann,
Definieren eines bestimmten Domain-Namens, der zu der bestimmten IP-Adresse des bestimmen Web-Servers (7) korrespondiert und Eintragen des entsprechenden bestimmten Domain-Namens bei zumindest einem Name-Server (6) des World Wide Web (WWW), wobei zumindest der Second-Level-Domain-Bestandteil dieses Domain-Namens aus einer Folge von Zeichen besteht, von denen sich jedes einzelne über die Tastatur des Mobilfunkgerätes (2) direkt eintippen läßt,
Bereitstellen eines Adressierungsportals auf dem bestimmten Web-Server (7), wobei das Adressierungsportal eine Tabellen- oder Datenbankeinrichtung umfaßt, die eine eindeutige Zuweisung von Pseudo-Adressen zu IP-Adressen des World Wide Web (WWW) oder zu auf Namen-Servern des World Wide Web registrierten korrespondierenden Domain-Namen vorgeben, wobei die jeweilige Zuweisung File-Verzeichnisse auf dem entsprechenden Sever mitenthalten kann und wobei die Pseudo-Adressen ausschließlich aus Zahlen bestehen,
Eingeben des bestimmten Domain-Namens sowie einer gewünschten Pseudo-Adresse über die Tastatur des Mobilfunkgerätes (2),
Übertragen einer Verbindungsanfrage, enthaltend den bestimmen Domain-Namen und die gewünschte Pseudo-Adresse über Funk an eine Gateway-Einrichtung (4), die eine Einspeisung der Verbindungsanfrage in das World Wide Web (WWW) ermöglicht,
durch Unterstützung eines Name-Servers (6) des World Wide Web (WWW), bei dem der bestimmte Domain-Name des bestimmten Web-Servers registriert ist: Vermitteln der Verbindungsanfrage an den bestimmten Web-Server (7);
durch Unterstützung des Adressierungsportals des bestimmen Web-Servers: Vermitteln der Verbindungsanfrage an denjenigen Server (9) des World Wide Web (WWW), dessen IP-Adresse oder dessen Domain-Name durch die in der Tabellen- oder Datenbankeinrichtung des Adressierungsportals enthaltene Zuweisungsvereinbarung aufgrund der in der Verbindungsanfrage enthaltenen Pseudo-Adresse vorgegeben ist.

2. Verfahren zum Adressieren von WML-Seiten im World Wide Web (WWW) mittels eines Mobilfunkgeräts (2), umfassend die Schritte:
Bereitstellen eines bestimmten Web-Server (7), der an das World Wide Web (WWW) angeschlossen ist und unter einer bestimmten IP-Adresse angesprochen werden kann,
Definieren eines bestimmten Domain-Namens, der zu der bestimmten IP-Adresse des bestimmen Web-Servers korrespondiert und Eintragen des entsprechenden bestimmten Domain-Namens bei zumindest einem Näme-Server (6) des World Wide Web (WWW), wobei zumindest der Second-Level-Domain-Bestandteil dieses Domain-Namens aus einer Folge von Zeichen besteht, von denen sich jedes einzelne über die Tastatur des Mobilfunkgerätes (2) direkt eintippen läßt,
Bereitstellen eines Adressierungsportals auf dem bestimmten Web-Server (7), wobei das Adressierungsportal eine Tabellen- oder Datenbankeinrichtung umfaßt, die eine eindeutige Zuweisung von Pseudo-Adressen zu IP-Adressen des World Wide Web (WWW) oder zu auf Namen-Servern des World Wide Web registrierten korrespondierenden Domain-Namen vorgeben, wobei die jeweilige Zuweisung File-Verzeichnisse auf dem entsprechenden Server mitenthalten kann und wobei die Pseudo-Adressen ausschließlich aus Zahlen bestehen,
Eingeben des bestimmten Domain-Namens über die Tastatur des Mobilfunkgerätes (2),
Übertragen einer Verbindungsanfrage, enthaltend den bestimmen Domain-Namen über Funk an eine Gateway-Einrichtung (4), die eine Einspeisung der Verbindungsanfrage in das World Wide Web (WWW) ermöglicht,
durch Unterstützung eines Name-Servers (6) des World Wide Web (WWW), bei dem der bestimmte Domain-Name des bestimmten Web-Servers registriert ist: Vermitteln der Verbindungsanfrage an den bestimmten Web-Server (7);
durch Unterstützung des Adressierungsportals des bestimmen Web-Servers: Aufbauen einer Verbindung zwischen dem Adressierungsportal und dem Mobilfunkgerät (2),
Auffordern des Benutzers zur Eingabe einer gewünschten Pseudoadresse;
Eingeben der Pseudoadresse über die Tastatur des Mobilfunkgerätes (2),
Vermitteln einer Verbindungsanfrage an denjenigen Server (9) des World Wide Web (WWW), dessen IP-Adresse oder dessen Domain-Name durch die in der Tabellenoder Datenbankeinrichtung des Adressierungsportals enthaltene Zuweisungsvereinbarung aufgrund der Pseudo-Adresse vorgegeben ist.

3. Verfahren nach Anspruch 1 oder 2, **dadurch gekennzeichnet, daß** der Second-Level-Domain-Bestandteil des bestimmten Domain-Namens "gamt" lautet.

4. Verfahren nach einem der Ansprüche 1 bis 3, **dadurch gekennzeichnet, daß** der Top-Level-Domain-Bestandteil des bestimmten Domain-Namens "ad" lautet.

5. Verfahren nach einem der Ansprüche 1 bis 4, **dadurch gekennzeichnet, daß** die Kommunikation zwischen dem Mobilfunkgerät (2) und der Gateway-Einrichtung (4) entsprechend dem Wireless Application Protocol WAP abgewickelt wird.

6. Verfahren nach einem der Ansprüche 1 bis 5, **dadurch gekennzeichnet, daß** die Funkkommunikation auf dem GSM-, UMTS- oder GPRS-Standard beruht.

## Claims

1. Procedure for accessing WML pages on the World Wide Web (WWW) by means of a mobile radio device (2) comprising the steps:
Provision of a particular Web Server (7) connected to the World Wide Web, which can be accessed under a particular IP Address,
Definition of a particular domain name, which corresponds to the particular IP address of the particular Web Server (7), and registration of the corresponding particular domain name with at least one Name Server (6) of the World Wide Web (WWW), whereby at least the Second Level Domain component of this domain name is comprised of a series of characters whereby each individual character can be typed in using the keys of the mobile radio device (2),
Provision of an address portal on a particular Web Server (7), whereby the address portal comprises a spreadsheet or database facility, which enables the unequivocal allocation of pseudo- addresses to the IP addresses of the World Wide Web (WWW), or which indicates the corresponding domain names registered on the Name Server of the World Wide Web, whereby the respective allocation may include the File Directories and whereby the alias addresses are made up exclusively of numbers,
Input of a particular domain name as well as a desired alias address by means of the keys of a mobile radio device (2),
Transmission of a handshake request containing the particular domain name and the desired alias address via radio to a gateway facility (4), which enables the input of the handshake request into the World Wide Web (WWW),
by supporting a Name Server (6) of the World Wide Web (WWW) at which the particular domain name of the particular Web Server is registered: transmission of the handshake request to the particular Web Server, (7)
by supporting the address portal of the particular Web Server:
transmission of the handshake request to that particular server of the World Wide Web (WWW), whose IP address or domain name is provided by the allocation procedure contained in the spreadsheet or database facility of the address portal predetermined on the basis of the alias address contained in the handshake request;

2. Procedure for accessing WML pages on the World Wide Web (WWW) by means of a mobile radio device (2) comprising the steps:
Provision of a particular Web Server (7) connected to the World Wide Web, which can be accessed under a particular IP Address,
Definition of a particular domain name, which corresponds to the particular IP address of the particular Web Server, and registration of the corresponding particular domain name with at least one Name Server (6) of the World Wide Web, whereby at least the Second Level Domain component of this domain name is comprised of a series of characters whereby each individual character can be typed in using the keys of the mobile radio device (2),
Provision of an address portal on a particular Web Server (7), whereby the address portal comprises a spreadsheet or database facility, which enables the unequivocal allocation of pseudo- addresses to the IP addresses of the World Wide Web (WWW), or which indicates the corresponding domain names registered on the Name Server of the World Wide Web, whereby the respective allocation may include the File Directories and whereby the alias addresses are made up exclusively of numbers,
Input of the particular domain name via the keys of the mobile radio device (2),
Transmission of a handshake request containing the particular domain name via radio to a gateway facility (4), which enables the input of the handshake request into the World Wide Web (WWW),
by supporting a Name Server (6) of the World Wide Web (WWW) at which the particular domain name of the particular Web Server is registered: transmission of the handshake request to the particular Web Server, (7)
By supporting the address portal of the particular Web Server: establishing a connection between the address portal and the mobile radio device (2),
Requesting the user to enter a desired alias address;
Input of the of the alias address via the keys of the mobile radio device (2),
transmission of the handshake request to that particular server of the World Wide Web (WWW), whose IP address or domain name is provided by the allocation procedure contained in the spreadsheet or database facility of the address portal predetermined on the basis of the alias address contained in the handshake request;

3. Procedure according to claims 1 or 2, **characterised by** the condition that the Second Level Domain component of the particular Domain Name reads "gamt".

4. Procedure according to claims 1 to 3, **characterised by** the fact that the Top Level Domain component of the particular domain name reads "ad".

5. Procedure according to claims 1 to 4, **characterised by** the fact that communication between the mobile radio device (2) and the Gateway Facility (4) is effected in accordance with the Wireless Application Protocol (WAP).

6. Procedure according to one of the claims 1 to 5, **characterised by** the fact that the radio connection is based on the GMS, UMTS or GPRS standard.

## Revendications

1. Procédure d'adresser des pages de WML dans le World Wide Web (WWW) moyennant un appareil radiotéléphonique mobile (2), comprenant les pas :
Mise à la disposition d'un web-server (7), qui est relié au World Wide Web (WWW) et qui peut être adressé sous une certaine adresse IP.
Définition d'un nom domaine, correspondant à l'adresse IP certaine du web-server certain (7), et inscription du nom domaine correspondant auprès au moins un server-nom (6) du world wide web (www), dont au moins la partie second-level de la domaine consiste d'une suite de caractères, dont chacun peut être entré par le clavier de l'appareil radiotéléphonique mobile (27) directement.
Mise à la disposition d'un portail d'adresse su le web-server certain (7), tout en contenant le portail d'adresse une installation de tableaux et de banque de données, qui prédétermine clairement des pseudo-adresses à des adresses IP du world wide web (www)ou à des noms de domaines correspondants enregistrés sur des servers-noms du world wide web, dont chacune des affectations peut contenir des répertoires de files sur le server correspondant et dont les pseudo-adresses consistent uniquement de chiffres.
Entrée du nom de domaine certain ainsi que la pseudo-adresse désirée par le clavier de l'appareil radiotéléphonique mobile (2).
Transmission d'une demande de connexion, contenant le nom de domaine certain et la pseudo-adresse certaine par radio à une installation gate-way (4)qui rend une entrée de la demande de connexion dans le world wide web possible,
En soutenant un server-nom (6) du world wide web (www) auprès duquel le nom de la domaine certain du web-server certain est enregistré : Commutation de la demande de connexion au web-server certain (7),
En soutenant le portail d'adresse du web-server certain : commutation de la demande de connexion à ce server (9) du world wide web (www), dont l'adresse IP ou dont le nom de domaine est prédéterminé par la convention d'affectation basée sur la pseudo-adresse incluse dans la demande de connexion.

2. Procédure pour adresser des pages WML- dans le world wide web (www) moyennant un appareil de radiotéléphonique mobile (2) contenant les pas :
Mise à la disposition d'un web-server (7), qui est relié au World Wide Web (WWW) et qui peut être adressé sous une certaine adresse IP.
Définition d'un nom domaine, correspondant à l'adresse IP certaine du web-server certain, et inscription du nom domaine correspondant auprès au moins un server-nom (6) du world wide web (www), dont au moins la partie second-level de la domaine consiste d'une suite de caractères, dont chacun peut être entré par le clavier de l'appareil radiotéléphonique mobile (27) directement.
Mise à la disposition d'un portail d'adresse su le web-server certain (7), tout en contenant le portail d'adresse une installation de tableaux et de banque de données, qui prédétermine clairement des pseudo-adresses à des adresses IP du world wide web (www)ou à des noms de domaines correspondants enregistrés sur des servers-noms du world wide web, dont chacune des affectations peut contenir des répertoires de files sur le server correspondant et dont les pseudo-adresses consistent uniquement de chiffres.
Entrée du nom de domaine certain par le clavier de l'appareil radiotéléphonique mobile (2)
Transmission d'une demande de connexion, contenant le nom de domaine certain par radio à une installation gate-way (4)qui rend une entrée de la demande de connexion dans le world wide web possible,
En soutenant un server-nom (6) du world wide web (www) auprès duquel le nom de la domaine certain du web-server certain est enregistré : Commutation de la demande de connexion au web-server certain (7),
En soutenant le portail d'adresse du web-server certain : établissement d'une connexion entre le portai d'adresse et l'appareil radiotéléphonique mobile (2),
Invitation de l'utilisateur d'entrer une pseudo-adresse désirée,
Entrée de la pseudo-adresse par le clavier de l'appareil radiotéléphonique mobile (2),
Commutation d'une demande de connexion à ce server (9) du world wide web (www)dont l'adresse IP ou dont le nom de la domaine est prédéterminé par la convention d'affectation basée sur la pseudo-adresse incluse dans la demande de connexion.

3. Procédure d'après revendication 1 ou 2, **marqué par le fait,** que la partie de la domaine second-level du nom de la domaine certain est « gami ».

4. Procédure d'après l'une des revendications 1 à 3, **marqué par le fait,** que la partie de la domaine top-level du nom de la domaine certain est « ad ».

5. Procédure d'après l'une des revendications 1 à 4, **marqué par le fait,** que la communication entre l'appareil radiotéléphonique mobile (2) et l'installation gateway (4) se déroule conformément au Wireless Application Protocol WAP.

6. Procédure d'après l'une des revendications 1 à 5, **marqué par le fait,** que la communication radiotéléphonique mobile repose sur les standards de GSM, UMTS ou GPRS.
